# EUROPEAN PATENT APPLICATION

(11) **EP 1 038 629 A2**
(43) Date of publication of application: **27.09.2000**
(21) Application number: 00109871.4
(22) Date of filing: 20.01.1993
(51) Int. Cl.: B23P 15/28, B23C 5/16

(54) **Cutting insert**

(62) Divisional of application: 95202468.5
(71) Applicant: SANDVIK AKTIEBOLAG, 811 81 Sandviken (SE)
(72) Inventor: Pantzar, Göran, S-810 22 Arsunda (SE); Carsson, Sven-Erik, S-747 41 Gimo (SE)
(74) Representative: Weber, Dieter, Dr.

(57) **Abstract**

The invention relates to a cutting insert for chipbreaking machining comprising a pressed and sintered powder body having a top chip surface (2), a bottom surface (3), and at least one edge surface (4A-4D) interconnecting said top and bottom surfaces, said edge surface including a relief surface portion (8, 10) intersecting said top surface (2) at an acute angle to form therewith at least one cutting edge (6, 7). In order to eliminate every form of aftergrinding in the immediate proximity of the cutting edges, the insert is characterized in that said edge surface (4A-4D) is provided with a recess (15) during the form-pressing step, said recess (15) intersecting the bottom surface (3).

## Description

The present invention relates to a cutting insert for chipbreaking machining tools, in particular for milling tools such as facemilling tools.

Such an insert is typically manufactured by formpressing and sintering of an insert-forming powder material to form a body which comprises a top chip surface, a suitably planar bottom surface that can rest upon a seat surface of the machining tool, and at least one edge surface of the machining tool, and at least one edge surface extending between the top and bottom surfaces. The edge surface, which can be placed in abutment with at least one cooperating side abutment surface of the tool, is generally inclined at an acute angle with respect to the chip surface and at an obtuse angle with respect to the bottom surface, whereby a cutting edge is formed along the intersection of the chip surface and the edge surface, adjacent to which cutting edge there is one or several relief or clearance faces.

For the manufacturing of such cutting inserts, in particular indexable cutting inserts of hard metal (i.e., cemented carbide), a direct-pressing method is frequently used, in which a hard metal-forming powder first is formed to the intended shape in a suitable pressing die and then given the final strength and size by sintering in an oven at a temperature above 1000°C. The pressing operation as such has been further developed over the years and is today so advanced that it enables the formation of the cutting edges and adjacent chip-forming faces and possible reinforcing faces with great dimensional precision. However, during the sintering operation a shrinkage takes place (usually amounting to about 18% of the original length in each dimension) and due to this, the cutting insert loses some of its original precision.

In EP-A-414 910, a ceramic cutting insert is disclosed which is first sintered and then ground. However, this grinding is costly because it is in no way limited to any particular part of the insert.

For some types of machining, e.g., some sorts of facemilling, the requirements of form and dimensional precision have become more rigorous over the last years. Particularly insert geometries with a positive cutting edge require a very high degree of dimensional accuracy to guarantee a satisfactory function at small tooth feeds. These precision requirements have up to now been met by so-called contour grinding, which consists of aftergrinding the surface(s) adjacent to the individual cutting edge in one step after sintering. However, a serious disadvantage of such contour grinding is that it causes modifications in the micro-geometry of the insert, i.e., in the surface structure of the insert's edge-shaping parts after a surface treatment such as blasting, face grinding or deposition of a hardness-improving surface layer, which is usually done as soon as possible after the sintering has been finished. Thus, the width of existing negative reinforcing surfaces is altered, as well as the distance from the cutting edge to the chipforming surfaces. In practice, this means that the chipforming ability and the cutting performance of the cutting insert are diminished and that its strength and life are reduced.

In the Japanese laid-open Utility Model publication 62-46520 (published 1987), a cutting insert is disclosed with ground edge surfaces and a large recess for saving grinding work. However, also the side edge surface intersecting the cutting edge is ground, thus causing the disadvantages mentioned above. Moreover, the narrow side edge portions left at the two sides of the recess are neither intended to, nor capable of, functioning as abutment surfaces. The abutment against the surfaces in the insert pocket is effected by a line contact along the surface above the recess.

In US-A-4 050 127 a cutting insert is disclosed with grooves on its side surfaces. However, the only purpose of such a groove is to cooperate with a damping tongue that is inserted into the groove in order to improve a steady and reliable fastening of the insert.

### SUMMARY OF THE INVENTION

An object of the present invention is to remove the above mentioned disadvantages by eliminating every form of after-grinding in the immediate proximity of the cutting edge(s). Thus, one object of the invention is to produce a cutting insert a cutting insert whose working dimensions can be established with high accuracy without necessitating any aftergrinding of the cutting edges in question. A further object of the invention is to enable a simple and rational production of such inserts.

In a process aspect of the invention, a powder is pressed to form an insert body having a top chip surface, a bottom surface, and at least one edge surface interconnecting the top and bottom surfaces. The edge surface includes a relief surface portion intersecting the top surface at an acute angle to form therewith a cutting edge. That press-formed body is then sintered. Finally, whenever required, the edge surface is ground, but only along a lower portion thereof disposed below the relief surface portion.

That lower portion of the edge surface is, during a cutting operation, placed against a locating surface of a machine tool. By subjecting only that lower surface portion to a grinding operation, the insert dimensions assume a much greater degree of precision while avoiding the aforementioned problems resulting when the entire edge surface and/or top surface are subjected to grinding.

### BRIEF DESCRIPTION OF THE DRAWINGS

A preferred embodiment of the invention will be described below in detail with reference to the accompanying drawings in which:
Fig 1 is a simplified top perspective view of a cutting insert according to the present invention, in which a grinding has been performed;
Fig 2 is a transparent top perspective view of the same cutting insert;
Fig 3 is a side view of the cutting insert in connection with a schematically shown grinding tool;
Fig 4 is an end view of a facemilling tool equipped with cutting inserts according to the invention and illustrating the positioning of the inserts in the facemill, and
Fig 5 is a side view of the facemill of Fig 4.

### DETAILED DESCRIPTION OF A PREFERRED EMBODIMENT OF THE INVENTION

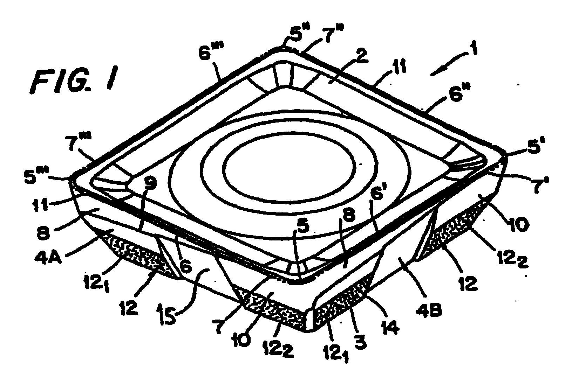

In Fig 1 to 3 a cutting insert 1 of square basic shape is shown. The cutting insert 1 comprises a top chip surface 2 and a suitably planar bottom surface 3 which is substantially parallel with the plane P₂ of the chip surface 2. In this square embodiment four identical edge surfaces 4A, 4B, 4C and 4D extend between the chip surface 2 and the bottom surface 3. The cutting insert has a positive geometry, meaning that the insert's edge surfaces 4 lie in planes that on one hand form an obtuse angle with the plane of the bottom surface 3 and on the other hand form an acute angle with the plane of the chip surface P₂.

Disposed between adjacent edge surfaces are corners 5, 5', 5'' and 5'''. In the area between the chip surface 2 and one of the edge surfaces 4A are disposed two cutting edges, *viz*. a main cutting edge 6 and a secondary cutting edge 7. In an analagous manner, between chip surface 2 and another edge surface 4B are disposed a main cutting edge 6' and a secondary cutting edge 7', similar pairs of cutting edges 6'', 7'' and 6''', 7''' being formed in the transitions between the chip surface and each one of the edge surfaces 4C and 4D. Each main cutting edge 6 forms a certain angle with the secondary cutting edge 7 as the surface 2 is viewed in plan. In practice, this angle should lie within the range of 0,5 to 4°.

Along a certain part of each edge surface, the cutting insert 1 has a planar relief surface 8, which extends along a substantial extent of the respective main cutting edge 6 and whose width or height increases toward a corner located adjacent that main cutting edge. For example, at the edge surface 4A, the width of relief surface 8 gradually decreases in the direction from the corner 5''' towards the corner 5. This relief surface 8 is oriented in a plane substantially perpendicular to the plane P₂, which is dearly shown in Fig 3. Along a dividing or junction line 9, this first relief surface 8 joins a second relief surface 10, whose width decreases in the direction from the corner 5 towards the corner 5'''. This second relief surface 10 is inclined at an acute angle γ in relation to the plane P₂ of the chip surface, for instance an angle within the range of 65 to 75°, suitably around 70°, as shown in Fig 3. The top surface 2 includes an upper reinforcing land 11 joining the cutting edges 6, 7 and having a substantially constant width, at least along the main cutting edge 6. The land preferably lies in the plane P₂ and joins an intermediate surface portion 11A, which in turn joins a chip-breaking portion 2A of the top surface 2. The latter may include many different chip breakers.

In the center of the cutting insert there is a hole for the application of a suitable fastening means.

The cutting insert described so far has been previously described in SE 9003827-4 (& EP-A-489 702), which is hereby incorporated by reference.

Besides the two relief surfaces 8, 10, each edge surface 4A-4D according to the present invention also comprises, a third surface portion 12 which, whenever grinding has been effected, is formed by grinding of the cutting insert. In Fig 3, it is schematically illustrated how this third surface 12 may be produced by applying a grinding tool 13 against the edge surface in question. In Fig 3, the grinding tool 13 is in contact with surface 4A. The cutting edge 6'' on the diametrically opposed side 4C functions as an abutment for positioning the insert 13 during the grinding operation. More specifically, the grinding tool is brought to such a depth that a precise dimension A is attained between the cutting edge 6'' and the diametrically opposed surface 12. This is important, since the ground surface 12 will abut a locating surface of a machine tool in order to position the diagonally opposite cutting edge during a cutting operation.

The inclination angle θ of the ground surface 12 in relation to the plane P₂ of the chip surface is in practice somewhat smaller than the previously mentioned inclination angle γ of the other relief surface 10. In practice, the difference between these angles should lie within the range 1 to 6° and preferably about 40°. Thus, if the angle γ is 70°, then the angle θ should amount to about 66°. Thus, in case of grinding, a junction edge 14 is formed between the two surfaces 10 and 12. In practice, this edge 14 should extend parallel to the bottom surface 3, giving the surface 12 constant width W along its whole length. In practice, the width of this surface 12 is about half of the insert's thickness T, although it could alternatively be less or more. However, the width W of the ground surface 12 should always amount to at least 40% of the insert's thickness T.

Naturally, the grinding operation is resource-demanding in that it requires time and energy. The ideal is of course when no grinding is necessary; for instance this would be the case when the precise dimension A has been attained directly after sintering and cooling. In any case, in order to reduce time and energy consumption to a minimum, the cutting insert has been provided with a preferably centrally placed recess 15 on each edge surface 4A-4D during the form-pressing step. As may be seen in Fig 1 to 3, this recess may extend from the junction line 9 and intersect the bottom surface 3. Further, this recess divides the ground surface on each side of the cutting insert into two surface portions 12₁ and 12₂. In practice, the length of the recess 15 can be as much as about 25 to about 35% of the whole length L of the ground surface 12, so that the total surface area of the surface portions 12₁ and 12₂ is about 75-65% of the area that the ground surface would have had if it had not been interrupted by the recess 15. As may be clearly seen in Fig 3, L is more specifically the length of the straight part of the intersection line between the bottom surface 3 and an edge surface 4A-4D.

While the surfaces 8 and 10 next to the cutting edges are kept in the same shape as formed by form-pressing and sintering steps, the surfaces 12 are produced when grinding. This enables a very high degree of dimensional accuracy to be attained in that the tolerance of the aforedescribed dimension A between the individual grinding surface and a diametrically opposed cutting edge (i.e., the variance of the dimension A from a desired value) will lie within a very small range, i.e., the range 1 to 20 µm, preferably 1 to 10 µm. The individual ground surface 12 is not a real relief surface under any of the cutting edges; it merely serves as an abutment surface in connection with a side abutment surface of the machining tool for positioning the insert during cutting.

Figures 4 and 5 illustrate a facemiller 20 equipped with a number of cutting inserts 1 according to the invention, having the recesses 15. (although the cutting inserts in Fig 5 are shown with a differently shaped chip surface than the cutting insert shown in Fig 1). As may be seen in Fig 4 and 5, the inserts have not been ground. The cutting inserts are placed into recesses of the milling cutter 20 in such a way that the milled angle in the workpiece will be 90°. In each individual recess of the milling cutter, there are three separate abutment surfaces, *viz*. a bottom abutment seat surface 16 against which the bottom surface 3 of the cutting insert is placed, a first abutment surface 17 and a second abutment surface 18 against which two of the edge surfaces 12 of the cutting insert are placed, while the cutting edges of the other two edge surfaces are in a working position. Generally, the geometry is such that the radial rake angle α is negative and the axial rake angle β is positive. Decisive for the machining accuracy is on one hand the radial dimension B between the rotation axis of the milling cutter and a peripherally situated main cutting edge 6 on the individual cutting insert, and on the other hand the axial dimension C between the upper, planar surface 19 of the milling cutter and the secondary cutting edges 7 of the individual cutting insert. These dimensions B and C are of course dependent upon the dimension A between the individual cutting edge and the diametrically opposed abutment surface 12, which abuts either of the surfaces 17 and 18. Whenever required, by making this abutment surface 12 in the from of a ground surface, not only the benefit of high dimensional precision is realized, but also the basic advantage that the micro-geometry of the cutting insert can be maintained unchanged after sintering and possible surface treatment. In this way, *inter alia*, the reinforcing faces 11 which were produced during the form-pressing and sintering steps, may keep their original width, and the chip-breakers in the chip surface 2 can keep their positions in relation with the cutting edges.

The invention is naturally not restricted to what has been described above or to the embodiments illustrated in the drawings. Thus, it is also feasible to use the inventive concept for cutting inserts with another polygonal basic form than the square shape, e.g., a triangular shape. Further, the cutting insert according to the invention may also be applied to other chipbreaking machining tools than just facemillers.

Moreover, it is pointed out that the cutting insert according to the invention need not necessarily have two cutting edges 6, 7 and two distinct relief surfaces 8, 10 separated by an inclined juncture edge 9. Rather, it is also possible to produce the cutting insert with only one relief surface and one single cutting edge along each side, whereby that relief surface, whenever required, joins a ground surface having a smaller angle in relation with the chip surface than the relief surface.

Furthermore, the design of the chip breakers on the top surface of the cutting insert may vary quite considerably, as well as the form and the dimensions of all possible reinforcing faces.

The inventive concept is also applicable on cutting inserts made of other materials than hard metal, as long as a powder is form-pressed and sintered.

## Claims

1. A cutting insert for chip-breaking machining comprising a pressed and sintered powder body having a top chip surface (2), a bottom surface (3), and at least one edge surface (4A-4D) interconnecting said top and bottom surfaces, said edge surface including a relief surface portion (8, 10) intersecting said top surface (2) at an acute angle to form therewith at least one cutting edge (6, 7), ***characterized in that*** said edge surface (4A-4D) is provided with a recess (15) during the form-pressing step, said recess (15) intersecting the bottom surface (3).

2. Cutting insert according to claim 1, ***characterized in that*** said recess (15) is centrally placed on the edge surface (4A-4D).

3. Cutting insert according to claim 1 or 2, ***characterized in that*** said edge surface (4A-4D) includes an additional relief surface portion (10) located below the relief surface portion (8) that intersects the top surface (2).

4. Cutting insert according to claim 3, ***characterized in that*** the additional relief surface portion (10) is inclined at an angle (γ) within the range of 65 to 75° relative to the plane (P₂) of the top chip surface (2).

5. Cutting insert according to any of the preceding claims, ***characterized in that*** a portion of or the whole of the edge surface (4A-4D) below the relief surface (8) that intersects the cutting edge (6, 7) is divided by the recess (15) into spaced apart sections.

6. Cutting insert according to claim 3, 4 or 5, ***characterized in that*** the recess (15) extends from a junction line (9) between the additional relief surface portion (10) and the relief surface portion (8) that intersects the top surface (2), and downwardly, to intersect the bottom surface 3.

7. Cutting insert according to any of the preceding claims, ***characterized in that*** the length of the recess amounts to about 25 to about 35% of the whole length (L) of the straight part of the intersection line between the bottom surface (3) and an edge surface (4A-4D).

8. Cutting insert according to any of the preceding claims, ***characterized in that*** said body is polygonal and includes a plurality of edge surfaces forming diametrically opposed cutting edges (6, 7).
